# FASCICULE DE BREVET EUROPEEN

(11) **EP 2 456 924 B1**
(45) Date de publication et mention de la délivrance du brevet: **27.08.2014**
(21) Numéro de dépôt: 10752019.9
(22) Date de dépôt: 15.07.2010
(51) Int. Cl.: E02D 29/02, F16G 11/00

(54) **DISPOSITIF DE LIAISON POUR UN OUVRAGE EN SOL RENFORCE, OUVRAGE ET PROCEDE ASSOCIES**
VERBINDUNGSGLIED BEI STÜTZWAND MIT BEWEHRTER ERDE, STÜTZWAND UND VERFAHREN ZUR ERRICHTUNG SOLCH EINER STÜTZWAND.
CONNECTOR FOR A RETAINING WALL TO THE REFILL, RETAINING WALL, AND METHOD OF MAKING SUCH A RETAINING WALL.

(30) Priorité: 22.07.2009 FR 0955114
(43) Date de publication de la demande: 30.05.2012
(73) Titulaire: Terre Armée Internationale, 78140 Vélizy Villacoublay (FR)
(72) Inventeur: FREITAG, Nicolas, F-91400 Orsay (FR); MORIZOT, Jean-Claude, F-75020 Paris (FR); BERARD, Gilles, F-92350 Le Plessis-Robinson (FR)
(74) Mandataire: Cabinet Plasseraud
(86) Numéro de dépôt international: PCT/FR2010/051487
(87) Numéro de publication internationale: WO 2011/010048

(56) Documents cités:
- EP-A2- 0 872 597
- US-A- 4 952 098
- US-A- 5 797 706

## Description

La présente invention concerne un dispositif de liaison pour la construction d'ouvrages en sol renforcé. Cette technique de construction est couramment utilisée pour réaliser des ouvrages tels que des murs de soutènement, des culées de ponts, etc.

Un ouvrage en sol renforcé associe un remblai compacté, un parement et des renforcements, en général connectés au parement. Le parement est en général constitué d'une pluralité d'éléments de parement assemblés entre eux.

Divers types de renforcements, en général longitudinaux, peuvent être utilisés : métalliques (par exemple comprenant des tiges en acier galvanisé), synthétiques (par exemple à base de fibres de polyester ou de géotextiles). Ils sont mis en place dans le sol avec une densité dépendant des contraintes pouvant s'exercer sur l'ouvrage, les efforts de poussée du terrain étant repris par le frottement sol-renforcements. Un dispositif selon le préambule de la revendication 1 est connu par US 5797706 A1.

Le parement est le plus souvent réalisé à partir d'éléments préfabriqués en béton, ou de grilles métalliques sous la forme de panneaux juxtaposés pour recouvrir la face frontale de l'ouvrage.

Il peut y avoir des décrochements horizontaux sur la face frontale entre différents niveaux de parement. La face frontale peut également être inclinée, en général avec une surface au sol initiale plus grande qu'au sommet de l'ouvrage en sol renforcé, mais il est également possible d'élaborer des ouvrages avec des parements en surplomb.

Les renforcements placés dans le remblai sont solidarisés au parement à l'aide de dispositifs de liaison pouvant prendre diverses formes. Une fois l'ouvrage terminé, les renforcements répartis dans le remblai transmettent des charges élevées, pouvant aller jusqu'à plusieurs tonnes.

Les dispositifs de liaison connus sont par exemple des dispositifs comprenant une partie fixée à un élément de parement prolongée par des parties comprenant des moyens pour recevoir une goupille autour de laquelle un renfort peut être disposé. Un exemple d'un tel mode de réalisation ressort du document FR 2 803 610. Selon un autre exemple, illustré dans le document EP 0 872 597, des dispositifs de liaison comprennent des parties en forme de crochet fixées à un élément de parement reliées par une partie de renvoi autour de laquelle est disposé un tube, autour duquel un renfort peut être disposé.

Ces dispositifs de liaison connus présentent néanmoins certains inconvénients car leur installation peut nécessiter plusieurs étapes et on constate dans certains cas que la liaison d'un renfort au parement peut ne pas être optimale.

Le but de la présente invention est d'obvier aux inconvénients précités et d'offrir un dispositif de liaison, pour un ouvrage en sol renforcé, économique, simple à mettre en oeuvre et assurant une bonne liaison entre un élément de parement et un renfort longitudinal.

L'invention propose ainsi un dispositif de liaison entre un élément de parement d'un ouvrage de construction en sol renforcé et un renfort longitudinal, destiné à s'étendre dans un remblai dudit ouvrage, où ledit dispositif de liaison comprend une partie de fixation à l'élément de parement, deux parties de raccord dont une première extrémité de chacune d'entre elles est reliée à un point de la partie de fixation, où une deuxième extrémité de chaque partie de raccord est reliée à une première extrémité d'une première et d'une deuxième partie de renvoi, où les parties de renvoi sont sensiblement parallèles entre elles et où une deuxième extrémité de chacune des parties de renvoi est reliée à un segment de maintien sensiblement perpendiculaire aux parties de renvoi.

Les éléments de parement peuvent être de différente nature, tels que, et de manière non limitative, formés de treillis métalliques, de plaques de ciment ou de béton, notamment armé, de panneaux en plastique, de panneaux en bois, par exemple sous la forme de caillebotis, de grilles obtenues avec des géo-matériaux dites géo-grilles. Ces éléments de parement en général disposés pour constituer la face frontale de l'ouvrage, peuvent l'être de manière sensiblement verticale ou de manière inclinée vers l'arrière ou vers l'avant, en surplomb.

Selon un mode de réalisation, le renfort longitudinal est constitué d'une bande souple.

On entend par « partie de fixation », une partie du dispositif de liaison destinée à être solidarisée avec l'élément de parement. Une telle solidarisation peut s'effectuer par exemple par fixation du dispositif de liaison dans une partie adéquate d'un élément de parement achevé, notamment à une tige de l'élément de parement ou à un anneau solidaire de l'élément de parement, ou peut s'effectuer au moment de la fabrication de l'élément de parement, notamment par insertion dans un moule du dispositif de liaison au moment de couler un élément de parement ou également par déformation de tiges métalliques de l'élément de parement pour former le dispositif de liaison.

On entend par « partie de renvoi », une partie du dispositif de liaison destinée à recevoir un renfort longitudinal, notamment un renfort souple. Dans ce dernier cas, le renfort souple est disposé de préférence de manière à former une boucle ouverte autour de la partie de renvoi. Cette boucle ouverte est alors prolongée par deux parties de renfort de la bande s'étendant dans le remblai.

On entend par « segment de maintien », une partie du dispositif de liaison, prolongeant l'extrémité d'une partie de renvoi, éloignée de l'extrémité reliée à une partie de fixation, et disposée dans une autre direction que celle de ladite partie de renvoi.

On entend par « sensiblement parallèle » la disposition relative de deux parties dont l'angle que fait l'une par rapport à l'autre est faible, par exemple inférieur ou égal à 10°.

On entend par « sensiblement perpendiculaire » la disposition relative de deux parties dont l'angle que fait l'une par rapport à l'autre est proche d'un angle droit, par exemple égale à 90° ± 10°.

Le dispositif de liaison selon l'invention est de structure simple et économique à produire.

On peut par exemple l'obtenir par pliage et/ou soudage d'une tige métallique ou d'une pluralité de tiges métalliques, notamment en acier.

Selon un mode de réalisation, les différentes parties constituant le dispositif de liaison sont en continuité de matière.

Les inventeurs ont pu constater que la présence d'un segment de maintien sensiblement perpendiculaire à chaque partie de renvoi permet d'éviter que le dispositif de liaison ne s'ouvre significativement quand un effort de traction est appliqué par un renfort longitudinal relié à un élément de parement par ledit dispositif de liaison.

On obtient ainsi, grâce au dispositif de liaison selon l'invention, des ouvrages de construction pérennes, où la liaison entre le renfort et l'élément de parement est assuré de manière efficace et simple.

Selon différents modes de réalisation du dispositif de liaison, qui peuvent être combinés ensemble selon toutes les configurations possibles :
- les deux segments de maintien sont disposés dans un plan sensiblement perpendiculaire au plan moyen formé par la partie de fixation, les deux parties de raccord et les deux parties de renvoi ; on entend par « plan moyen » un plan où l'aire projetée du dispositif de liaison est maximale, et passant à équidistance de chacune des parties de renvoi (soit entre les deux parties de renvoi, soit à travers celles-ci) ;
- les deux segments de maintien sont disposés dans des sens opposés perpendiculaires aux parties de renvoi ;
- le dispositif de liaison forme une boucle ouverte continue où les deux parties de renvoi sont espacées l'une de l'autre d'une distance sensiblement constante ; à titre d'exemple la distance entre les deux parties de renvoi est comprise entre 1 cm et 5 cm ;
- la partie de fixation a une forme sensiblement en C dont le rayon de courbure est compris entre 1 cm et 10 cm ;
- les deux parties de raccord forment un V ou un U avec la partie de fixation.

Selon un mode de réalisation, le dispositif de liaison fait partie d'un panneau de grille métallique constituée d'une pluralité de tiges métalliques soudées entre elles où les extrémités de deux tiges métalliques sensiblement parallèles sont pliées pour former chacune une partie de raccord, une partie de renvoi et un segment de maintien.

L'invention vise également un procédé de construction d'un ouvrage de construction en sol renforcé comprenant un parement dressé selon une face frontale de l'ouvrage, un remblai, situé à l'arrière dudit parement et des renforts longitudinaux s'étendant dans le remblai et reliés au parement par un dispositif de liaison selon l'invention et décrit ci-dessus.

Selon différents modes de réalisation de l'ouvrage de construction en sol renforcé, qui peuvent être combinés ensemble selon toutes les configurations possibles :
- les renforts longitudinaux sont des bandes souples qui forment une boucle ouverte autour des deux parties de renvoi du dispositif de liaison ;
- une pièce d'appui en forme de boucle est disposée autour des deux parties de renvoi du dispositif de liaison et la boucle ouverte formée par les bandes souples passe autour de cette pièce d'appui ;
- le dispositif de liaison forme une boucle ouverte continue où deux parties sont espacées l'une de l'autre d'une distance sensiblement constante, l'élément de parement est un panneau de grille métallique constitué d'une pluralité de tiges métalliques soudées entre elles et le dispositif de liaison est disposé à l'intersection de deux tiges métalliques soudées.

Selon un mode de réalisation, la largeur d'une partie de renvoi est du même ordre de grandeur que celle du renfort qui lui est lié, voire est sensiblement égale.

Selon un mode de réalisation, l'élément de parement est un élément en béton dans lequel la partie de fixation d'un dispositif de liaison est inséré, notamment pendant la fabrication par coulage dudit élément en béton, et les deux parties de raccord émergent de l'élément en béton et sont prolongées au-delà par les deux parties de renvoi et les deux segments de maintien.

L'invention vise également un procédé de construction d'un ouvrage, tel que défini ci-dessus, dans lequel on dresse des éléments de parement suivant une face frontale de l'ouvrage, on apporte du matériau de remblai derrière lesdits éléments de parement après avoir mis en place des renforts longitudinaux, on compacte le matériau de remblai, et des renforts longitudinaux sont reliés aux éléments de parement par un dispositif de liaison selon l'invention et décrit ci-dessus.

Selon un mode de réalisation où le dispositif de liaison forme une boucle ouverte continue où deux parties de renvoi sont espacées l'une de l'autre d'une distance sensiblement constante, ledit dispositif de liaison est introduit à l'intersection des deux tiges métalliques soudée par passage entre les deux parties de renvoi.

D'autres particularités et avantages de la présente invention apparaîtront dans la description ci-après d'exemples de réalisation non limitatifs, en référence aux dessins annexés, dans lesquels :
- les figures 1a et b à 5 sont des vues schématiques en perspective de dispositifs de liaison selon l'invention fixés à l'intersection de deux tiges métalliques d'une grille formant un élément de parement ;
- la figure 6 est une vue schématique en perspective où des tiges métalliques d'une grille formant élément de percement sont pliées pour former un dispositif de liaison selon l'invention ;
- la figure 7 est une vue schématique en perspective où un dispositif de liaison est noyé dans un élément de parement en béton pour former un ouvrage selon l'invention ;
- Les figures 8 et 9 illustrent des coupes schématiques d'ouvrages selon l'invention.

Pour des raisons de clarté, les dimensions des différents éléments représentés sur ces figures ne sont pas nécessairement en proportion avec leurs dimensions réelles. Sur ces figures, des références identiques correspondent à des éléments identiques.

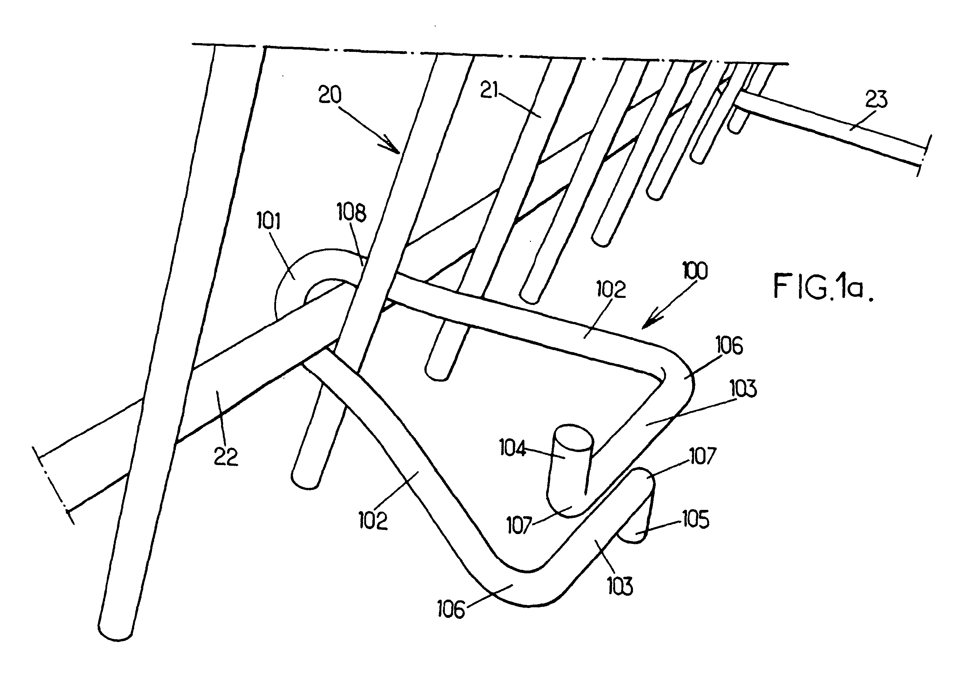

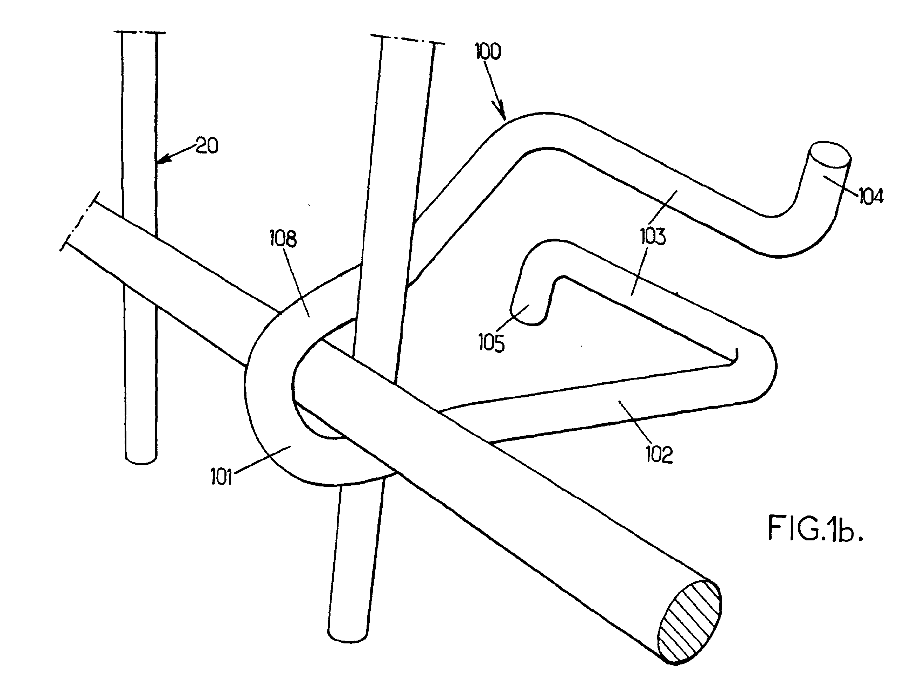

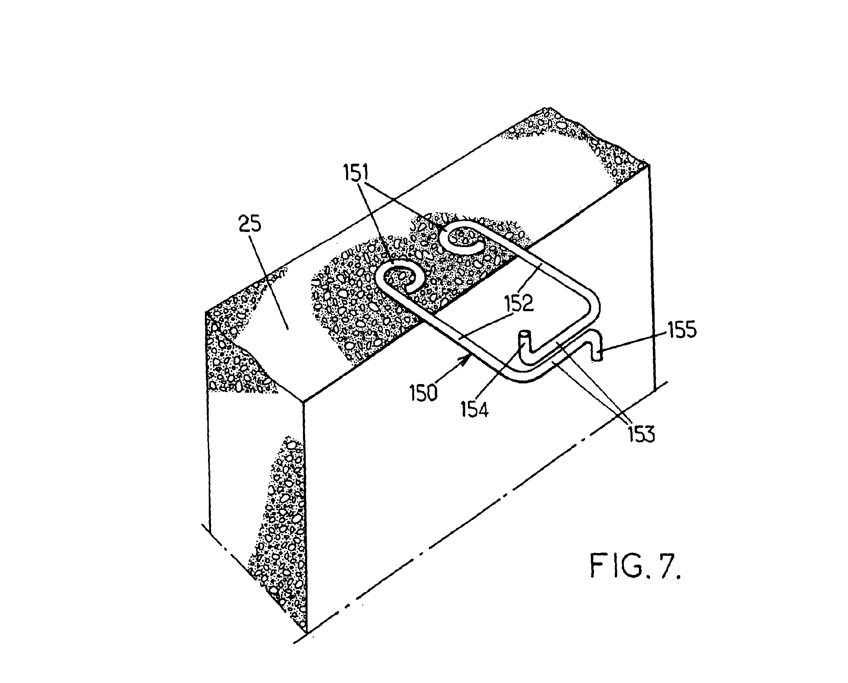

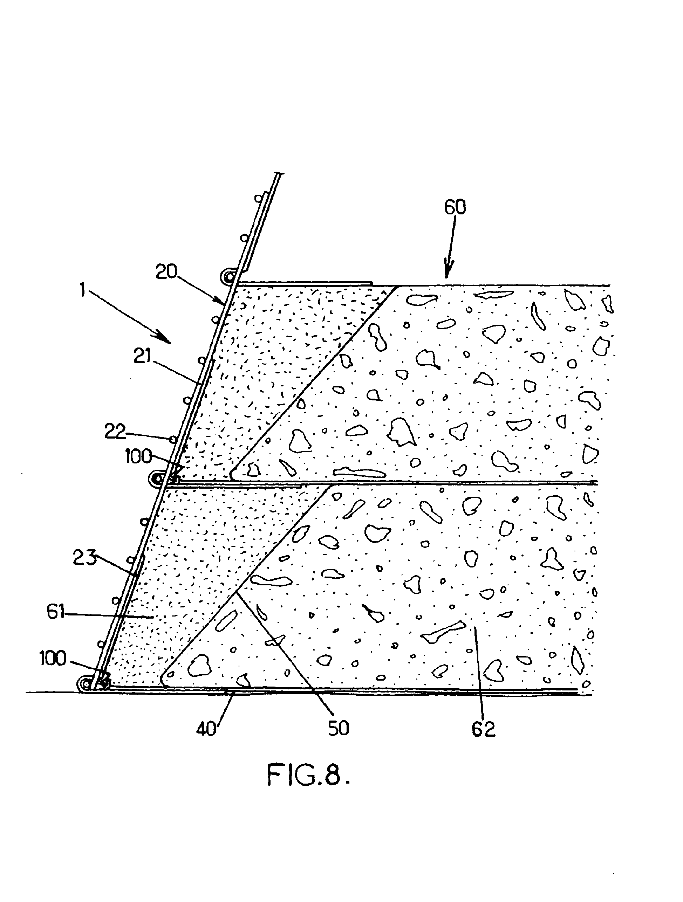

Les figures 1a et b illustrent un dispositif de liaison 100 selon l'invention, fixé à un élément de parement 20, constitué de tiges métalliques 21 destinées à être disposées horizontalement, et 22 destinées à être disposées sensiblement verticalement, soudées entre elles. Une tige métallique 23 comprenant une partie destinée à être disposée horizontalement et une partie repliée destinée à soutenir les tiges 20 et 21 assemblées (voir également les figures 7 et 8).

Une telle disposition d'éléments de parement destiné à construire un ouvrage en sol renforcé est par exemple mise en oeuvre dans les produits de référence commerciale TerraTrel ® commercialisés par la société Terre Armée Internationale.

Le dispositif de liaison 100 est constitué d'une tige métallique pliée qui comprend plusieurs parties : une partie de fixation 101 a la forme d'un C prolongé par deux sections droites 108, deux parties de raccord 102 s'écartant des sections droites 108, deux parties de renvoi 103 reliées aux parties de raccord 102 par un coude 106 et deux segments de maintien 104, 105 reliés chacune aux parties de renvoi 103 par un coude 106. L'ensemble forme une boucle ouverte où les deux parties de renvoi sont parallèles, espacées d'une distance sensiblement constante. Les deux segments de maintien 104, 105 sont disposés dans des sens opposés, de manière perpendiculaire aux parties de renvoi, dans un plan perpendiculaire au plan moyen formé par la partie de fixation, les deux parties de raccord et les deux parties de renvoi.

On peut par exemple disposer une bande souple formant une boucle autour des parties de renvoi 103. Des essais ont permis de montrer qu'une bande ainsi disposée et maintenue en tension ne conduisait pas à des déformations significatives du dispositif de liaison 100. On constate que dans les mêmes conditions, un dispositif de liaison qui serait dépourvu des segments de maintien a tendance à s'ouvrir et qu'au bout d'un certain temps la bande peut glisser hors du dispositif de liaison et s'en désolidariser.

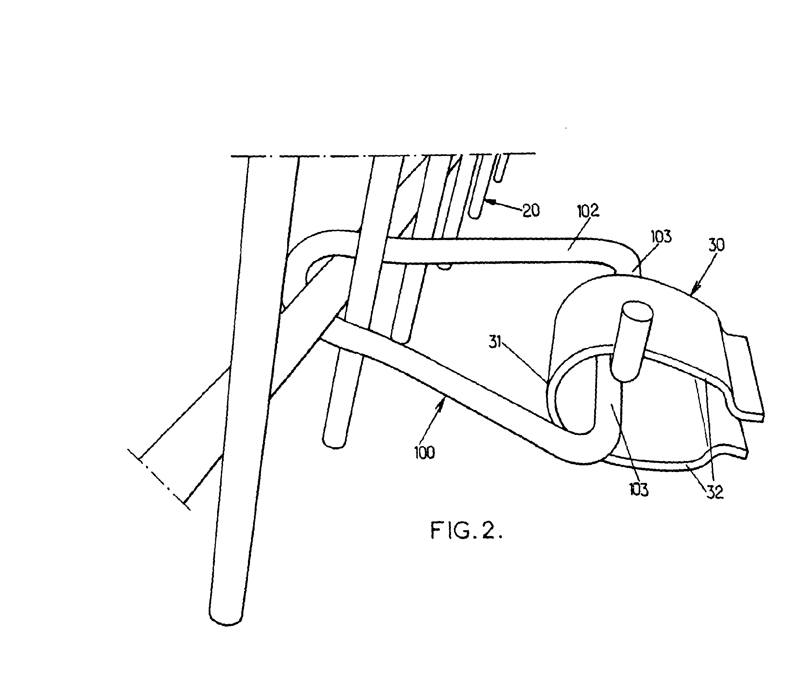

On a représenté en figure 2 le dispositif de liaison des figures 1a et b où les parties de renvoi 103 sont entourées par une pièce d'appui 30. Cette pièce d'appui permet d'imposer une courbure désirée à une bande souple disposée en formant une boucle ouverte autour d'elle. On peut ainsi limiter les risques d'endommagement d'une telle bande. La pièce d'appui comprend une partie 31 en forme de C prolongée par deux ailes 32 sur lesquelles une bande souple peut venir reposer.

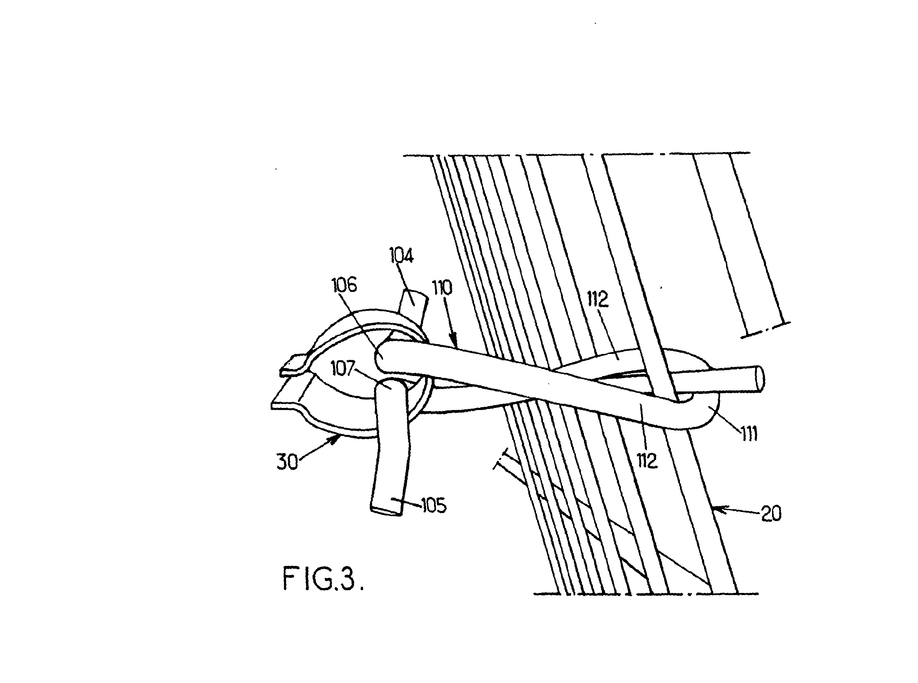

La figure 3 présente une variante 110 du dispositif de liaison précédent où la partie de fixation 111 et les parties de raccord 112 forment une courbe continue.

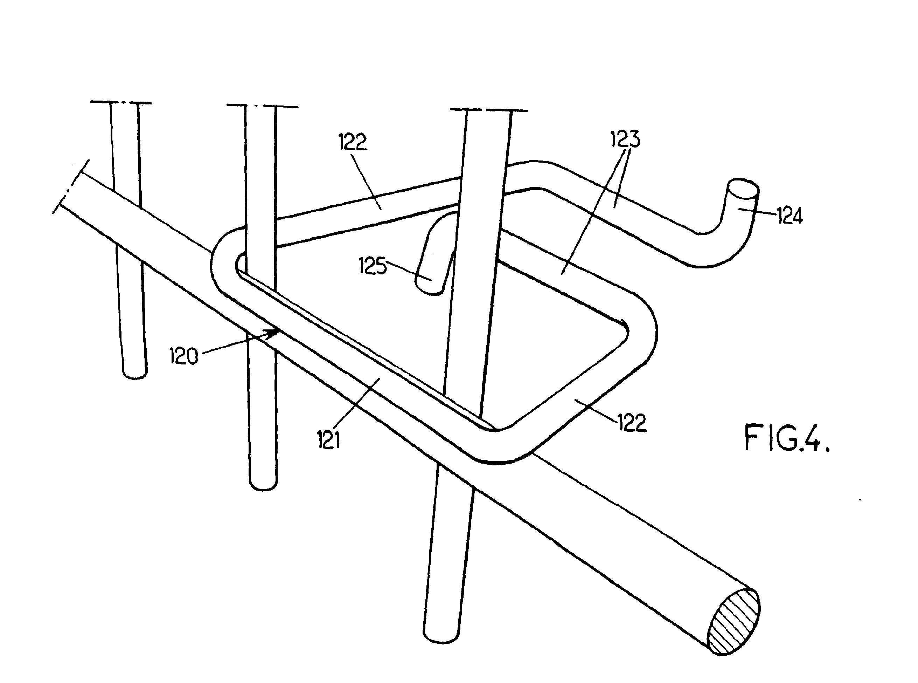

La figure 4 illustre une autre variante 120 d'un dispositif de liaison où la dimension maximale de la partie de fixation 121 est telle qu'elle est susceptible d'être disposée autour d'au moins deux barreaux verticaux consécutifs du panneau de grille métallique. Dans ce mode de réalisation, les parties de raccord 122 peuvent être sensiblement parallèles entre elles, ou être convergentes vers des parties de renvoi 123 dont la taille est inférieure à la dimension maximale de la partie de fixation 121.

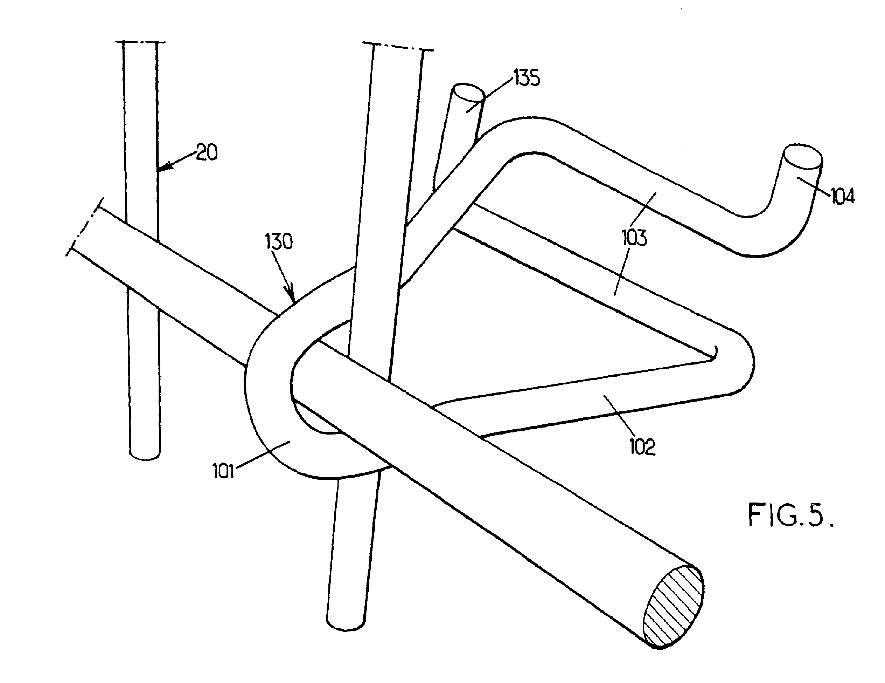

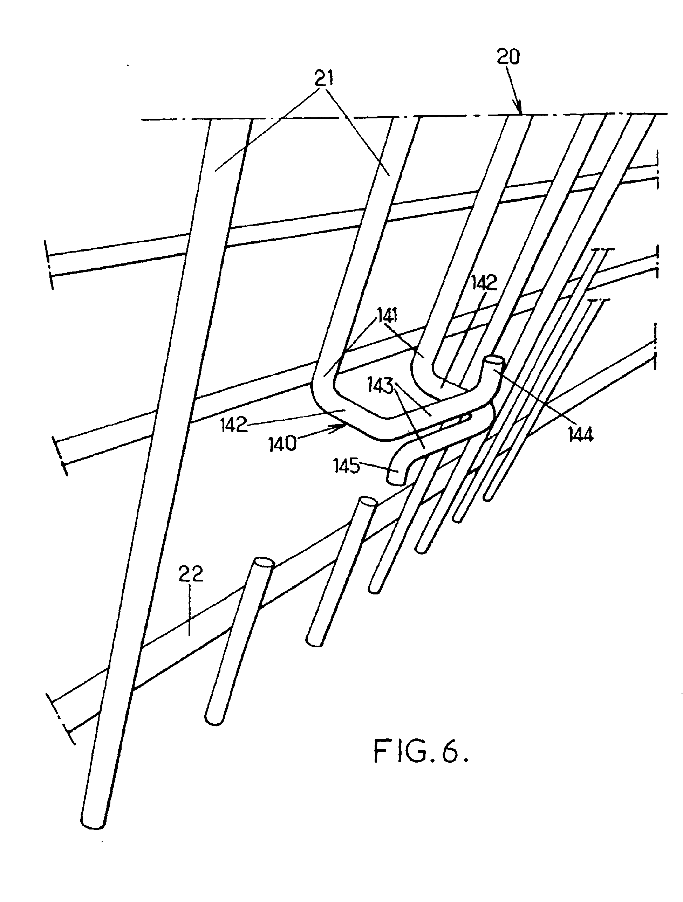

La figure 5 illustre une variante 130 du dispositif de fixation de la figure 1a et 6 où les deux segments de maintien 104 et 135 sont disposés dans le même sens.

On constate que les dispositifs de fixation des figures 1 à 5 peuvent aisément être disposés autour d'une ou de plusieurs tiges métalliques du panneau de grille métallique. On peut en effet glisser ces dispositifs de fixation par l'ouverture que procure l'espace entre les deux parties de renvoi.

Selon le mode de réalisation représenté sur les figures 1 à 3 et 5, la partie de fixation est disposée en biais, sensiblement à 45° par rapport aux tiges verticale et horizontale soudées. Il est ainsi possible de disposer ces dispositifs de fixation en un point particulièrement résistant du panneau de grille métallique.

Selon le mode de réalisation représenté en figure 4, on glisse le dispositif de fixation de manière à ce qu'il entoure deux tiges, permettant ainsi de répartir l'effort de traction sur le panneau quand l'ouvrage est achevé.

La figure 6 illustre un mode de réalisation d'un dispositif de fixation où ce dernier est obtenu par pliage et/ou soudage de tiges métalliques soudées de la grille métallique 20 formant élément de parement. La partie de fixation 141 est constituée de la zone de liaison entre deux tiges verticales 21 et une tige horizontale 22 et est prolongée par deux parties de raccord 142, elles-mêmes prolongées par deux parties de renvoi 143 liées à deux segments de maintien 144, 145, disposés perpendiculairement aux parties de renvoi 143.

La figure 7 illustre un autre mode de réalisation, où le dispositif de fixation 150 est composé de deux tiges métalliques pliées comprenant chacune une partie de fixation 151, prolongée par une partie de raccord 152, elle-même prolongée par une partie de renvoi 153 liée à un segment de maintien 154 ou 155. Les parties de fixation 151 ont la forme d'un crochet et sont fixées ensemble et à l'écartement désiré dans l'élément de parement 25 en béton quand le béton est coulé dans un moule. On peut alors disposer une bande souple autour des parties de renvoi 153 sans que celles-ci ne risquent de s'écarter significativement l'une de l'autre quand l'ouvrage est en charge.

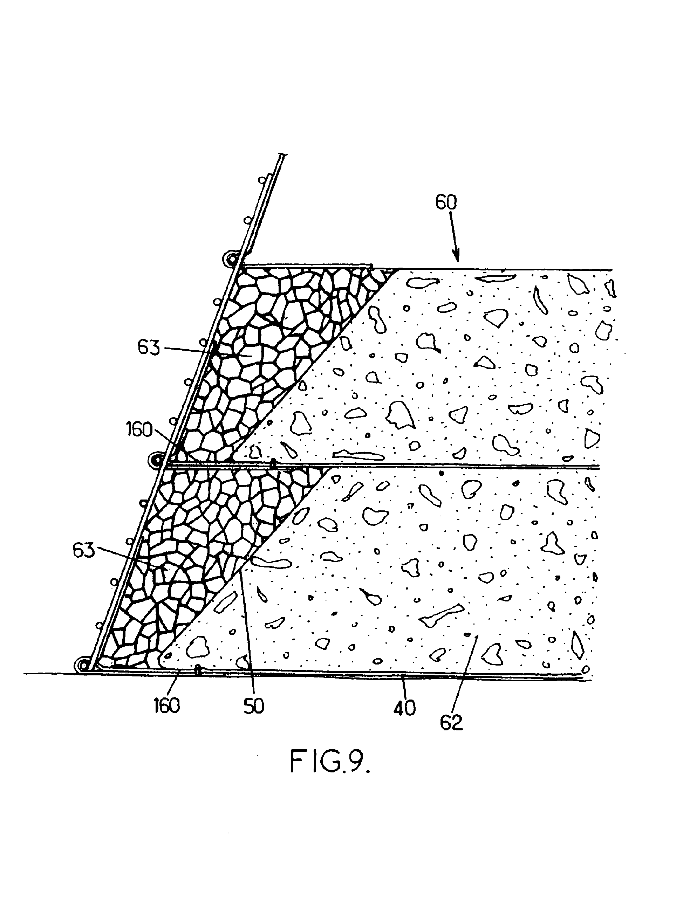

Les figures 8 et 9 illustrent des coupes schématiques d'ouvrages selon l'invention. La structure générale d'un tel ouvrage correspond aux ouvrages connus sous la référence commerciale TerraTrel ® commercialisées par la société Terre Armée Internationale.

L'ouvrage comprend un parement constitué d'une pluralité d'éléments de parement 20 disposés les uns au-dessus des autres. Les éléments de parement 20 sont des grilles constituées de tiges métalliques horizontales 22 et perpendiculaires 22, soudées entre elles. Des tiges pliées 23 sont disposées de manière à contribuer à la stabilité du parement, avec une partie dans le plan horizontal et une partie selon l'inclinaison du parement.

On dispose derrière le parement un remblai 60. Ce remblai peut être constitué de différents matériaux, tels que de la terre compactée 61, un mélange de terre et de cailloux 62, des cailloux ou fragments de roche 63. Selon certains modes de réalisation, le remblai est constitué de plusieurs types de matériaux de remblai. On peut séparer ces différents types de matériaux de remblai par un film, un tissu, notamment par un tissu de géomatériau 50. On peut ainsi obtenir des ouvrages dont l'aspect diffère significativement et est choisi en fonction de l'esthétique désirée : selon la figure 8, on peut disposer une couche de terre arable 61 au contact du parement, qui peut être ensuite végétalisée ; selon la figure 9, on peut disposer au contact du parement des fragments de roche qui demeurent apparents.

L'ouvrage est renforcé par des bandes souples 40 qui s'étendent dans le parement. Ces bandes souples peuvent être disposées dans un plan horizontal perpendiculairement ou en zigzag par rapport au parement.

Elles peuvent également être attachées à une paroi qui serait située derrière le parement et où l'espace entre cette paroi et le parement serait comblé par le remblai.

Les bandes 40 forment une boucle autour des deux parties de renvoi de dispositifs de liaison selon l'invention 100 (figure 8), 160 (figure 9).

Dans le cas de la figure 8, les dispositifs de liaison sont de petite taille, typiquement d'une longueur de l'ordre de 10 à 20 cm et sont du type de ceux représentés en figures 1 à 5.

Dans le cas de la figure 9, on peut trouver avantage à déplacer vers l'arrière du parement les parties de renvoi des dispositifs de liaison. En effet, il peut être avantageux d'éviter de disposer des bandes souples 40 dans la zone 63 où le remblai est en fragments de roches afin d'éviter d'endommager ces bandes. Pour ce faire, on peut prolonger les parties de raccord des dispositifs de liaison du type de ceux représentés en figures 1 à 5, et obtenir des dispositifs de liaison 160 représentés sur la figure 9 dont la longueur peut être de l'ordre du mètre. On peut aussi disposer une pièce de raccord intermédiaire entre les dispositifs de liaison et les bandes de renfort, par exemple en disposant une boucle fermée d'une bande de matériau souple autour des parties de renvoi des dispositifs de liaison et en reliant l'autre extrémité de la boucle à une bande de renfort.

Par ailleurs, on note que le dispositif de liaison peut également être relié au parement par l'intermédiaire d'une pièce, comme par exemple un anneau, une boucle souple, des crochets, ou toute autre pièce dans laquelle on peut insérer la partie de fixation du dispositif de liaison.

L'invention ne se limite pas à ces types de réalisation et doit être interprétée de façon non limitative, et englobant tout mode de réalisation équivalent.

Le dispositif de liaison proposé peut relier tout type de parement d'un ouvrage en sol renforcé avec tout type de renfort longitudinal susceptible de renforcer ledit ouvrage.

## Revendications

1. Dispositif de liaison (100, 110, 120, 130, 140, 150, 160) entre un élément de parement (20, 25) d'un ouvrage de construction en sol renforcé (1) et un renfort longitudinal (40), destiné à s'étendre dans un remblai (60) dudit ouvrage, où ledit dispositif de liaison (100, 110, 120, 130, 140, 150, 160) comprend une partie de fixation (101, 111, 121, 141, 151) à l'élément de parement (20, 25), deux parties de raccord (102, 112, 122, 142, 152) dont une première extrémité de chacune d'entre elles est reliée à un point de la partie de fixation (101, 111, 121, 141, 151) **caractérisé en ce qu'**une deuxième extrémité de chaque partie de raccord est reliée à une première extrémité d'une première et d'une deuxième partie de renvoi (103, 123, 143, 153) où les parties de renvoi (103, 123, 143, 153) sont sensiblement parallèles entre elles et où une deuxième extrémité de chacune des parties de renvoi est reliée à un segment de maintien (104, 105, 124, 125, 135, 144, 145, 154, 155) sensiblement perpendiculaire aux parties de renvoi (103, 123, 143, 153).

2. Dispositif de liaison selon la revendication précédente **caractérisé en ce qu'**il est constitué d'une (de) tige(s) métallique(s) pliée(s) et/ou soudée (s).

3. Dispositif de liaison selon l'une quelconque des revendications précédentes **caractérisé en ce que** les deux segments de maintien sont disposés dans un plan sensiblement perpendiculaire au plan moyen formé par la partie de fixation (101, 111, 121, 141, 151), les deux parties de raccord (102, 112, 122, 142, 152) et les deux parties de renvoi (103, 123, 143, 153).

4. Dispositif de liaison selon l'une quelconque des revendications précédentes **caractérisé en ce que** les deux segments de maintien (104, 105 ; 124, 125 ; 144, 145 ; 154, 155) sont disposés dans des sens opposés perpendiculaires aux parties de renvoi (103, 123, 143, 153).

5. Dispositif de liaison selon l'une quelconque des revendications précédentes **caractérisé en ce qu'**il forme une boucle ouverte continue où les deux parties de renvoi (103, 123, 143) sont espacées l'une de l'autre d'une distance sensiblement constante.

6. Dispositif de liaison selon l'une quelconque des revendications précédentes **caractérisé en ce que** la partie de fixation (101, 111, 121) a une forme sensiblement en C dont le rayon de courbure est compris entre 1 cm et 10 cm.

7. Dispositif de liaison selon la revendication précédente **caractérisé en ce que** les deux parties de raccord (102 ; 112 ; 122) forment un V ou un U avec la partie de fixation (101 ; 111 ; 121).

8. Dispositif de liaison selon l'une quelconque des revendications 2 à 4 **caractérisé en ce que** ledit dispositif de liaison fait partie d'un panneau de grille métallique constituée d'une pluralité de tiges métalliques (21, 22) soudées entre elles où les extrémités de deux tiges métalliques sensiblement parallèles sont pliées pour former chacune une partie de raccord (142), une partie de renvoi (143) et un segment de maintien (144, 145).

9. Ouvrage de construction en sol renforcé (1) comprenant un parement (20, 25) dressé selon une face frontale de l'ouvrage, un remblai (60), situé à l'arrière dudit parement et des renforts longitudinaux (40) s'étendant dans le remblai (60) et reliés au parement (20, 25) par un dispositif de liaison (100, 110, 120, 130, 140, 150, 160) selon l'une quelconque des revendications 1 à 8.

10. Ouvrage de construction selon la revendication précédente **caractérisé en ce que** les renforts longitudinaux (40) sont des bandes souples qui forment une boucle ouverte autour des deux parties de renvoi du dispositif de liaison.

11. Ouvrage de construction selon la revendication précédente **caractérisé en ce qu'**une pièce d'appui (30) en forme de boucle est disposée autour des deux parties de renvoi du dispositif de liaison et que la boucle ouverte formée par les bandes souples passe autour de cette pièce d'appui (30).

12. Ouvrage de construction selon l'une quelconque des revendications 9 à 11 où le dispositif de liaison (100, 110, 120, 130) comprend la caractéristique de la revendication 5 **caractérisé en ce que** l'élément de parement (20) est un panneau de grille métallique constitué d'une pluralité de tiges métalliques (21, 22) soudées entre elles et où ledit dispositif de liaison (100, 110, 120, 130) est disposé à l'intersection de deux tiges métalliques soudées.

13. Ouvrage de construction selon l'une quelconque des revendications 9 à 11 où l'élément de parement (25) est un élément en béton dans lequel la partie de fixation (151) d'un dispositif de liaison (150) est inséré, notamment pendant la fabrication par coulage dudit élément en béton, et où les deux parties de raccord (152) émergent de l'élément en béton et sont prolongées au-delà par les deux parties de renvoi (153) et les deux segments de maintien (154, 155).

14. Procédé de construction d'un ouvrage selon l'une quelconque des revendications 9 à 13 dans lequel on dresse des éléments de parement (20, 25) suivant une face frontale de l'ouvrage, on apporte du matériau de remblai derrière lesdits éléments de parement après avoir mis en place des renforts longitudinaux (40), on compacte le matériau de remblai, et où des renforts longitudinaux (40) sont reliés aux éléments de parement par un dispositif de liaison (100, 110, 120, 130, 140, 150, 160) selon l'une quelconque des revendications 1 à 8.

15. Procédé de construction selon la revendication précédente où l'ouvrage comprend les caractéristiques de la revendication 12 et où le dispositif de liaison (100, 110, 120, 130) est introduit à l'intersection des deux tiges métalliques soudée par passage entre les deux parties de renvoi (103, 123).

## Patentansprüche

1. Verbindungsvorrichtung (100, 110, 120, 130, 140, 150, 160) zwischen einem Außenhautelement (20, 25) eines Bauwerks mit bewehrter Erde (1) und einer Längsbewehrung (40), die dazu bestimmt ist, sich in einer Hinterfüllung (60) des Bauwerks zu erstrecken, wobei die Verbindungsvorrichtung (100, 110, 120, 130, 140, 150, 160) einen Teil zur Befestigung (101, 111, 121, 141, 151) am Außenhautelement (20, 25) und zwei Anschlussteile (102, 112, 122, 142, 152) umfasst, von denen jeweils ein erstes Ende mit einem Punkt des Befestigungsteils (101, 111, 121, 141, 151) verbunden ist, **dadurch gekennzeichnet, dass** ein zweites Ende jedes Anschlussteils mit einem ersten Ende eines ersten und eines zweiten Umlenkungsteils (103, 123, 143, 153) verbunden ist, wobei die Umlenkungsteile im Wesentlichen parallel zueinander verlaufen und wobei ein zweites Ende jedes Umlenkungsteils mit einem im Wesentlichen senkrecht zu den Umlenkungsteilen (103, 123, 143, 153) verlaufenden Haltesegment (104, 105, 124, 125, 135, 144, 145, 154, 155) verbunden ist.

2. Verbindungsvorrichtung nach dem vorhergehenden Anspruch, **dadurch gekennzeichnet, dass** sie aus (einem) gebogenen und/oder geschweißten Metallstab/Metallstäben besteht.

3. Verbindungsvorrichtung nach einem der vorhergehenden Ansprüche, **dadurch gekennzeichnet, dass** die beiden Haltesegmente in einer Ebene angeordnet sind, die im Wesentlichen senkrecht zur mittleren, durch das Befestigungsteil (101, 111, 121, 141, 151), die beiden Anschlussteile (102, 112, 122, 142, 152) und die beiden Umlenkungsteile (103, 123, 143, 153) gebildeten Ebene verläuft.

4. Verbindungsvorrichtung nach einem der vorhergehenden Ansprüche, **dadurch gekennzeichnet, dass** die beiden Haltesegmente (104, 105; 124, 125; 144, 145; 154, 155) in entgegengesetzten Richtungen senkrecht zu den Umlenkungsteilen (103, 123, 143, 153) angeordnet sind.

5. Verbindungsvorrichtung nach einem der vorhergehenden Ansprüche, **dadurch gekennzeichnet, dass** sie eine fortlaufende offene Lasche bildet, wobei die beiden Umlenkungsteile (103, 123, 143) in einem im Wesentlichen konstanten Abstand zueinander angeordnet sind.

6. Verbindungsvorrichtung nach einem der vorhergehenden Ansprüche, **dadurch gekennzeichnet, dass** der Befestigungsteil (101, 111, 112) im Wesentlichen die Form eines C aufweist, dessen Krümmungsradius zwischen 1 cm und 10 cm liegt.

7. Verbindungsvorrichtung nach dem vorhergehenden Anspruch, **dadurch gekennzeichnet, dass** die beiden Anschlussteile (102; 112; 122) mit dem Befestigungsteil (101; 111;121) ein V oder ein U bilden.

8. Verbindungsvorrichtung nach einem der Ansprüche 2 bis 4, **dadurch gekennzeichnet, dass** die Verbindungsvorrichtung Teil eines aus einer Mehrzahl von miteinander verschweißten Metallstäben (21, 22) bestehenden Metallgitterfeldes ist, wobei die Enden von zwei im Wesentlichen parallel zueinander verlaufenden Metallstäben gebogen sind, um jeweils einen Anschlussteil (142), einen Umlenkungsteil (143) und ein Haltesegment (144, 145) zu bilden.

9. Bauwerk mit bewehrter Erde (1), umfassend eine entlang einer Stirnseite des Bauwerks errichtete Außenhaut (20, 25), eine hinter der Außenhaut befindliche Hinterfüllung (6) und sich in der Hinterfüllung (60) erstreckende, durch eine Verbindungsvorrichtung (100, 110, 120, 130, 140, 150, 160) nach einem der Ansprüche 1 bis 8 mit der Außenhaut (20, 25) verbundene Längsbewehrungen (40).

10. Bauwerk nach dem vorhergehenden Anspruch, **dadurch gekennzeichnet, dass** die Längsbewehrungen (40) flexible Bänder sind, die eine offene Lasche um die beiden Umlenkungsteile der Verbindungsvorrichtung bilden.

11. Bauwerk nach dem vorhergehenden Anspruch, **dadurch gekennzeichnet, dass** ein Halteteil (30) in Form einer Lasche um die beiden Umlenkungsteile der Verbindungsvorrichtung angeordnet ist und dass die durch die flexiblen Bänder gebildete offene Lasche um dieses Halteteil (30) herumläuft.

12. Bauwerk nach einem der Ansprüche 9 bis 11, wobei die Verbindungsvorrichtung (100, 110, 120, 130) das Merkmal des Anspruchs 5 aufweist, **dadurch gekennzeichnet, dass** das Außenhautelement (20) ein aus einer Mehrzahl von miteinander verschweißten Metallstäben (21, 22) bestehendes Metallgitterfeld ist und wobei die Verbindungsvorrichtung (100, 110, 120, 130) am Kreuzungspunkt zweier verschweißter Metallstäbe angeordnet ist.

13. Bauwerk nach einem der Ansprüche 9 bis 11, wobei das Außenhautelement (25) ein Betonelement ist, in das der Befestigungsteil (151) einer Verbindungsvorrichtung (150) insbesondere während der Herstellung des Betonelements durch Gießen eingefügt wird, und wobei die beiden Anschlussteile (152) aus dem Betonelement herausragen und durch die beiden Umlenkungsteile (153) und die beiden Halteteile (154, 155) darüber hinaus verlängert werden.

14. Verfahren zum Bau eines Bauwerks nach einem der Ansprüche 9 bis 13, in dem Außenhautelemente (20, 25) entlang einer Stirnseite des Bauwerks errichtet werden, nach dem Einlegen von Längsbewehrungen (40) Hinterfüllungsmaterial hinter den Außenhautelementen eingebracht wird, das Hinterfüllungsmaterial verdichtet wird und wobei die Längsbewehrungen (40) durch eine Verbindungsvorrichtung (100, 110, 120, 130, 140, 150, 160) nach einem der Ansprüche 1 bis 8 mit den Außenhautelementen verbunden werden.

15. Bauverfahren nach dem vorhergehenden Anspruch, wobei das Bauwerk die Merkmale des Anspruchs 12 aufweist und wobei die Verbindungsvorrichtung (100, 110, 120, 130) durch Hindurchführen zwischen den beiden Umlenkungsteilen (103, 123) am Kreuzungspunkt der beiden verschweißten Metallstäbe eingefügt wird.

## Claims

1. Link device (100, 110, 120, 130, 140, 150, 160) between a facing element (20, 25) of a reinforced ground construction work (1) and a longitudinal reinforcement (40), intended to extend in a backfill (60) of said work, wherein said link device (100, 110, 120, 130, 140, 150, 160) comprises a portion (101, 111, 121, 141, 151) for fixing to the facing element (20, 25), two connecting portions (102, 112, 122, 142, 152) each having a first end linked to a point of the fixing portion (101, 111, 121, 141, 151), **characterized in that** a second end of each connecting portion is linked to a first end of a first and of a second return portion (103, 123, 143, 153) in which the return portions (103, 123, 143, 153) are substantially parallel to one another and in which a second end of each of the return portions is linked to a securing segment (104, 105, 124, 125, 135, 144, 145, 154, 155) substantially perpendicular to the return portions (103, 123, 143, 153).

2. Link device according to the preceding claim, **characterized in that** it consists of one or more bent and/or welded metal rod(s).

3. Link device according to any one of the preceding claims, **characterized in that** the two securing segments are arranged in a plane substantially perpendicular to the median plane formed by the fixing portion (101, 111, 121, 141, 151), the two connecting portions (102, 112, 122, 142, 152) and the two return portions (103, 123, 143, 153).

4. Link device according to any one of the preceding claims, **characterized in that** the two securing segments (104, 105; 124, 125; 144, 145; 154, 155) are arranged in opposite directions perpendicular to the return portions (103, 123, 143, 153).

5. Link device according to any one of the preceding claims, **characterized in that** it forms a continuous open loop in which the two return portions (103, 123, 143) are spaced apart from one another by a substantially constant distance.

6. Link device according to any one of the preceding claims, **characterized in that** the fixing portion (101, 111, 121) is substantially C-shaped with a radius of curvature of between 1 cm and 10 cm.

7. Link device according to any one of the preceding claims, **characterized in that** the two connecting portions (102; 112; 122) form a V or a U with the fixing portion (101; 111; 121).

8. Link device according to any one of Claims 2 to 4, **characterized in that** said link device forms part of a metal grating panel consisting of a plurality of metal rods (21, 22) welded together in which the ends of two substantially parallel metal rods are bent so that each forms a connecting portion (142), a return portion (143) and a securing segment (144, 145).

9. Reinforced ground construction work (1) comprising a facing (20, 25) erected along a front face of the work, a backfill (60), situated behind said facing and longitudinal reinforcements (40) extending in the backfill (60) and linked to the facing (20, 25) by a link device (100, 110, 120, 130, 140, 150, 160) according to any one of Claims 1 to 8.

10. Construction work according to the preceding claim, **characterized in that** the longitudinal reinforcements (40) are flexible strips which form an open loop around the two return portions of the link device.

11. Construction work according to the preceding claim, **characterized in that** a loop-shaped bearing piece (30) is arranged around the two return portions of the link device and that the open loop formed by the flexible strips passes around this bearing piece (30).

12. Construction work according to any one of claims 9 to 11, wherein the link device (100, 110, 120, 130) comprises the characteristic of Claim 5, **characterized in that** the facing element (20) is a metal grating panel consisting of a plurality of metal rods (21, 22) welded together and wherein said link device (100, 110, 120, 130) is arranged at the intersection of two welded metal rods.

13. Construction work according to any one of claims 9 to 11, wherein the facing element (25) is a concrete element into which the fixing portion (151) of a link device (150) is inserted, notably during manufacture by pouring of said concrete element, and wherein the two connecting portions (152) emerge from the concrete element and are extended beyond by the two return portions (153) and the two securing segments (154, 155).

14. Method for constructing a work according to any one of claims 9 to 13, wherein facing elements (20, 25) are erected along a front face of the work, backfill material is added behind said facing elements after having put in place longitudinal reinforcements (40), the backfill material is compacted, and wherein longitudinal reinforcements (40) are linked to the facing elements by a link device (100, 110, 120, 130, 140, 150, 160) according to any one of Claims 1 to 8.

15. Construction method according to the preceding claim, wherein the work comprises the characteristics of claim 12 and wherein the link device (100, 110, 120, 130) is introduced at the intersection of the two welded metal rods by passage between the two return portions (103, 123).
